# EUROPEAN PATENT SPECIFICATION

(11) **EP 1 424 951 B1**
(45) Date of publication and mention of the grant of the patent: **17.02.2010**
(21) Application number: 02759612.1
(22) Date of filing: 09.09.2002
(51) Int. Cl.: A61C 1/18, F16C 19/02

(54) **IMPROVED BEARING FOR DENTAL HANDPIECE**
VERBESSERTES KUGELLAGER FÜR ZAHNÄRZTLICHES HANDSTÜCK
ROULEMENT A BILLES AMELIORE POUR PIECE A MAIN DENTAIRE

(30) Priority: 13.09.2001 US 951062; 25.02.2002 US 82580
(43) Date of publication of application: 09.06.2004
(73) Proprietor: DENTSPLY International Inc., York, PA 17405-0872 (US)
(72) Inventor: NOVAK, Eugene, J., Deerfield, IL 60015 (US); PAPANEK, Tom, Lake Forest, IL 60045 (US); AYZENSHETYN, Milhail, Buffalo Grove, IL 60089 (US)
(74) Representative: Hartz, Nikolai
(86) International application number: PCT/US2002/028716
(87) International publication number: WO 2003/022170

(56) References cited:
- WO-A-02/22039
- WO-A-95/08960
- FR-A- 2 792 378
- GB-A- 851 110
- US-A- 3 292 980
- US-A- 3 646 677
- US-A- 4 966 552
- US-A- 5 676 542

## Description

### TECHNICAL FIELD

The present invention is directed toward dental handpieces. More particularly, the invention is directed toward a dental handpiece having an improved bearing construction. The inventive bearing has a thick outer race and/or inner race.

### BACKGROUND OF THE INVENTION

A generic dental handpiece comprising the features of the preamble of the claim is known from WO 95/08 960.

Audible sound levels in air-turbine dental highspeed handpieces are currently known to range as high as 65-78 dBA or sometimes higher. This noise level is a primary complaint of users. Furthermore, there is a peak in the sound spectra at about 7,000 Hz, corresponding to the rotation speed of 425,000 rpm, and characterized by users as a "high pitched whine". It is clearly desirable to reduce the sound emitted by dental handpieces. It is believed that the bearing is one of the sources of this noise. For example, the Gyro handpiece available from Bien Air, has an air bearing and is known to have a lower sound intensity at 7,000 Hz. The bearing is typically the first element to fail (wear-out) in a dental handpiece.

Bearings commonly used in dental handpieces today have thin cross sections which make it difficult to fabricate (grind) the bearing races to the desired precision (often required to be 2.54·10⁻⁵ cm (10 X 10⁻⁶ inches) roundness and concentricity). Any improvements in bearing precision and surface finish are expected to improve bearing life and reduce bearing noise, are therefore, desirable.

Bearings used in dental handpieces today have thin cross sections of both inner race and outer race which make it difficult to fabricate (grind) the bearing races to the desired precision (typically 7.62·10⁻⁵ cm (30 µ inches) roundness and concentricity). Any improvements in bearing precision and surface finish are expected to improve bearing life and reduce bearing noise.

The inner races of bearings used in dental handpieces today have thin cross sections which make it difficult to press the bearings onto the shaft (bur-tube) without distortion. Any distortion of the inner race will result in variable clearances and forces on the balls, increasing noise and decreasing life.

Almost all bearings used in dental handpieces today have inner race ID (bore) of 0.32 cm (0.125") The standard cross section of bur shank used in a highspeed is 0.16 cm (0.063"). This leaves an annular ring of only 0.08 cm (0.031" inch) thickness in which to construct the chucking mechanism and bearing support shaft (bur-tube). This material limit constrains optimal design of the chuck and adequate stiffness of the bur-tube. For example, if the bur-tube distorts, it will cause the bearing inner race to distort. If the chuck is too thin, it may not adequately grip the bur.

Dental handpieces of any type or design are useful in conjunction with the bearings according to the present invention. One particularly useful class of such handpieces are conventionally known as "high speed" handpieces, and are often air-driven. Examples of such handpieces are shown for example, in U.S. Pat. Nos. 4,089,115, 4,279,597 and 5,040,980.

### SUMMARY OF THE INVENTION

It is therefore, an object of the invention to provide a dental handpiece.

It is another object of the invention to provide a dental handpiece improved with respect to its bearing construction.

It is a further object of the invention to provide a bearing construction for a dental handpiece which improves the audible sound qualities of the handpiece.

These and other objects of the invention which will become apparent from the following discussion, are accomplished by the invention as hereinafter described and claimed. Specifically, the present invention provides a dental handpiece having the features of the claim.

In general a dental handpiece comprises a rotor and a ball bearing assembly supporting said rotor. Said ball bearing assembly having at least one ball or preferably, a plurality of balls, and an inner and an outer race, said outer race having a thickened cross section.

### BRIEF DESCRIPTION OF THE DRAWING

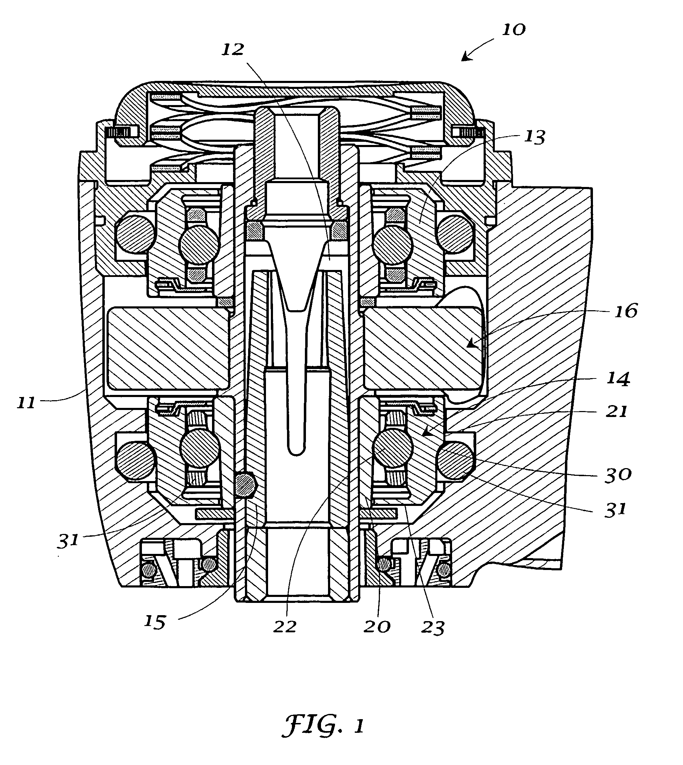

FIGURE 1 is a side elevational view of the working head portion of a dental handpiece, having the bearing construction according to the present invention.

### PREFERRED EMBODIMENTS FOR CARRYING OUT THE INVENTION

The handpiece selected for illustration is an air-driven handpiece 10 having a housing 11 with an internal chamber 12, and a pair of ball bearing assemblies 13 and 14 supporting rotor 15 for rotation within chamber 12 defined by the housing 11. The rotor includes any conventional driving means such as for example, an air-turbine16 for rotatably driving rotor 15. The turbine depicted in FIGURE 1 is a radial-flow turbine which is driven by air, but of course, can be of any conventional design.

Bearing assemblies 13 and 14 will be discussed with respect to bearing assembly 14, it being understood that bearing assembly 13 may be of similar design and construction. Bearing assembly 14 has an inner race 20 and an outer race 21. As shown, bearing assembly 14 supports rotor 15 in such a manner that rotor 15 is supported in the desired location, but is also free to rotate when for example, driven by turbine 16. Bearing assembly 14 also includes ball bearing 22. Such bearing assemblies as bearing assembly 14 are to such point, conventional in the art, and may also include according to the invention, a bearing shield 23 which is integral with the outer race.

According to the invention, outer race 21 is thicker than has heretofore been known in the art. For example, the outer race according to the invention and used in a dental handpiece of otherwise conventional size, has an outer diameter or cross section of 0.71 cm (0.28 inches) or even greater. The inventive outer race 21 is approximately double in thickness over those bearings conventionally known in the art, and has as much as 0.03 inches greater in cross section as compared to previous dental handpieces.

By way of example, TABLE I shows a comparison of an exemplary dental handpiece bearing construction according to the invention, as compared to a commercially available dental handpiece, namely an XGT handpiece available from DENTSPLY International Inc.

**TABLE I**

| | Conventional XGT Bearing | First referential Bearing Example | Inventive Bearing Example |
|---|---|---|---|
| inner cross section of inner race | (.125") .32 cm | (.125") .32 cm | (.140") .36 cm |
| Cross section of inner race ball track | (.165") .42 cm approx | (.165") .42 cm approx | (.183") .47 cm approx |
| Cross section of outer race ball track | (.220) .56 cm approx | (.220") .56 cm approx | (.240") .61 cm approx |
| outer cross section of outer race | (.250") .64 cm | (.280") .71 cm | (.280") .71 cm |

Also according to the present invention, the bearing does not have a flange, which in the previous conventional bearings served to transmit axial force from an elastomeric suspension "quad-ring". Rather, the new bearing has a slight shoulder 30 upon which an elastomeric suspension o-ring 31 rests. O-ring 31 may be held within a groove 32. Axial force is still transferred from the 31 o-ring to the bearing outer race 21 to pre-load the bearing, but the geometry of the inventive bearing directs the vector of that force inline with the contacts between ball 22 and ball grooves. It is believed that this directed force improves bearing performance under varying load conditions.

The races of the bearing 14 may be made from any conventional material useful for dental applications, such as for example, 440C "micro-melt" stainless steel.

As stated above, the outer race 21 of the inventive bearing 14 also includes an integral shield 23 on one side, in contrast to typical bearing practice in which one or both shields are separate rings welded or otherwise held in place. The shield on the opposite side of the new bearing is attached by any conventional means, such as spot-welding to the outer race 21 in a conventional manner.

The retainer material of the bearing 14 may be any conventional material, such as Torlon, as currently used in many dental bearings. Of course, any retainer material or configuration could be used with the thick outer race.

The balls 22 of the new bearing are preferably made of stainless steel, as currently used in almost all dental bearings. Of course, any allowable ball material could be used with the thick outer race.

Alternatively, increased mass of the outer race may be achieved by using a more dense material, without changing the cross section of the outer race, this solution, however, in not part of the present invention. Further, two or more different materials may be used to fabricate the outer race. The innermost portion of the race would be of a material (e.g. hardened steel or ceramic) selected to optimize bearing performance and life. The outermost portion could be a material chosen for sound damping properties or greater density. Additionally, a thin layer of adhesive, plastic, or elastomer between the two layers could further dampen sound transmission. A sleeve of any material surrounding the outer race of a conventional bearing may be employed.

The bearing could also incorporate other features:
A shield on one side which is integrated (formed with) the outer race.
A radiused flange on the outer race sized to mate with an elastomeric o-ring for suspension.
A bearing in which both the inner and outer race were thicker.
A bearing in which the inner race is comprised of multiple materials or sleeves, as describe above for the outer race.
Various materials for the races, balls, and ball retainer. Various configurations of ball retainer.
Various configurations and geometry's of ball grooves. Various sizes of balls.

The invention also proves easier to manufacture to high tolerances, and has less bearing distortion during manufacturing (during grinding, shield welding, and bearing press-fit assembly).

Prototype bearings have been assembled into prototype handpieces and testing shows an 8 - 12 dB reduction in noise.

It will also be appreciated that the dental handpiece bearing may be improved by varying either the thickness of the outer race, the inner race or both. As shown in TABLE I above, the inner race ball bearing track may also be made thicker. Combinations of thicker and thicker inner and outer races are within the scope of the invention. As will be appreciated, once one has determined not to be constrained by standard bearing size, various combination of bearing inner race ID, outer race OD, and ball track cross sections can be arrived at to optimize the overall design of the handpiece, according to the present invention.

While in the foregoing specification a detailed description of the invention has been set forth for the purpose of illustration, variations of the details herein given may be made by those skilled in the art without departing from the scope of the invention.

## Claims

1. A dental handpiece (10) having a rotor (15) supported by a ball bearing assembly (13, 14), said ball bearing assembly (13, 14) having at least one ball (22) and an inner and an outer race (20, 21) and having an outer and an inner race ball bearing track, **characterized in that** said outer race ball track has a diameter of 0.61 cm (0.24 inches), said inner race ball track has a diameter of 0.47 cm (0.185 inches), said inner race (20) has an inner diameter of 0.36 cm (0.14 inches), and said outer race (21) has an outer diameter of 0.71 cm (0.28 inches) or greater.

## Patentansprüche

1. Dentales Handstück (10) mit einem Rotor (15), der von einem Kugellageraufbau (13, 14) gehalten wird, wobei der Kugellageraufbau (13, 14) mindestens eine Kugel (22) aufweist sowie ein inneres und ein äußeres Lager (20, 21) und eine äußere und eine innere Kugellagerbahn, **dadurch gekennzeichnet, dass** die äußere Kugellagerbahn einen Durchmesser von 0,61 cm (0,24 Inch) aufweist, die innere Kugellagerbahn einen Durchmesser von 0,47 cm (0,185 Inch) aufweist, das innere Lager (20) einen Innendurchmesser von 0,36 cm (0,14 Inch) aufweist, und das äußere Lager (21) einen Außendurchmesser von mindestens 0,71 cm (0,28 Inch) aufweist.

## Revendications

1. Pièce à main dentaire (10), comportant un rotor (15) supporté par un ensemble de roulement à billes (13, 14), ledit ensemble de roulement à billes (13, 14) comportant au moins une bille (22) et des pistes intérieure et extérieure (20, 21) et comportant des pistes de roulement à billes extérieure et intérieure, **caractérisée en ce que** ladite piste de billes extérieure a un diamètre de 0,61 cm (0,24 pouce), ladite piste de billes intérieure a un diamètre de 0,47 cm (0,185 pouce), ladite piste intérieure (20) a un diamètre intérieur de 0,36 cm (0,14 pouce), et ladite piste extérieure (21) a un diamètre extérieur de 0,71 cm (0,28 pouce) ou plus.
